# EUROPEAN PATENT APPLICATION

(11) **EP 4 848 839 A1**
(43) Date of publication of application: **02.12.2026**
(21) Application number: 24926916.8
(22) Date of filing: 26.12.2024
(51) Int. Cl.: H04W 56/00

(54) **COMMUNICATION METHOD, COMMUNICATION APPARATUS, AND STORAGE MEDIUM**

(30) Priority: 26.02.2024 CN 202410218054; 29.08.2024 CN 202411199873
(71) Applicant: Honor Device Co., Ltd., Shenzhen 518040 (CN)
(72) Inventor: ZHANG, Mingzhu, Shenzhen, Guangdong 518040 (CN)
(74) Representative: Henselmann, Alexander Gerhard
(86) International application number: PCT/CN2024/142719
(87) International publication number: WO 2025/180058

(57) **Abstract**

This application discloses a communication method, a communication apparatus, and a storage medium. The method includes: A packet data convergence protocol PDCP entity determines that a first medium access control MAC entity meets a first condition, and the PDCP entity transmits a delay-critical data volume to the first MAC entity. In this way, the delay-critical data volume can be sent to the MAC entity that meets the first condition, thereby improving effectiveness of data transmission.

## Description

This application claims priority to Chinese Patent Application No. 202410218054.9, filed with the China National Intellectual Property Administration on February 26, 2024 and entitled "COMMUNICATION METHOD AND RELATED APPARATUS", and to Chinese Patent Application No. 202411199873.X, filed with the China National Intellectual Property Administration on August 29, 2024 and entitled "COMMUNICATION METHOD, COMMUNICATION APPARATUS, AND STORAGE MEDIUM", which are incorporated herein by reference in their entireties.

### TECHNICAL FIELD

This application relates to the field of communication technologies, and in particular, to a communication method, a communication apparatus, and a storage medium.

### BACKGROUND

With continuous development of communication systems, a data transmission delay is continuously reduced, and a transmission capacity is increasingly large. A 5th generation (5th generation, 5G) communication system has gradually given rise to some multi-media services with strong real-time performance, such as video transmission, cloud gaming, extended reality (extended reality, XR), and tactile Internet. To achieve immersive experience of interaction between humans and the virtual world, XR services with ultra-high bandwidth and ultra-low latency requirements have attracted much attention.

In current XR standards, data packet-based delay information reporting has been introduced. When delay information of a data packet is reported, a data volume of the data packet is reported, for example, a delay-critical data volume (for example, a delay-critical packet data convergence protocol (packet data convergence protocol, PDCP) data volume (delay-critical PDCP data volume)). When one PDCP entity is associated with one radio link control (radio link control, RLC) entity, the PDCP entity directly sends the data packet-based delay information to a medium access control (medium access control, MAC) entity of the RLC entity associated with the PDCP entity.

However, when one PDCP entity is associated with a plurality of RLC entities (for example, in a split bearer (split bearer) scenario, or a duplicate bearer (duplicate bearer) scenario, or a dual active protocol stack (dual active protocol stack, DAPS) bearer scenario, one PDCP entity is associated with two or more PDCP entities), different RLC entities may be associated with different MAC entities. Currently, there is no specification defining how the PDCP entity transmits the delay information to the MAC entity under such a circumstance.

### SUMMARY

Embodiments of this application disclose a communication method, a communication apparatus, and a storage medium, to improve effectiveness of data transmission.

According to a first aspect, an embodiment of this application discloses a first communication method. The communication method may be performed by a PDCP of a terminal device. The method includes: determining that a MAC entity meets a first condition; and transmitting a delay-critical data volume to a first MAC entity when the first MAC entity meets the first condition. That the MAC entity meets the first condition includes at least one of the following: the MAC entity has configured and triggered a delay status report (delay status report, DSR); an RLC entity associated with the MAC entity has configured and triggered the DSR; and a logic channel (logic channel, LCH) or a logic channel group (logic channel group, LCG) corresponding to the RLC entity associated with the MAC entity has configured and triggered the DSR. In this way, the PDCP entity can send the delay-critical data volume to the MAC entity that meets the first condition, thereby improving effectiveness of data transmission.

In some feasible examples, the method further includes at least one of the following: if the MAC entity has not configured the DSR, determining that the MAC entity does not meet the first condition; if the MAC entity has configured and has not triggered the DSR, determining that the MAC entity does not meet the first condition; if the RLC entity associated with the MAC entity has not configured the DSR, determining that the MAC entity does not meet the first condition; if the RLC entity associated with the MAC entity has configured and has not triggered the DSR, determining that the MAC entity does not meet the first condition; if the LCH or the LCG corresponding to the RLC entity associated with the MAC entity has not configured the DSR, determining that the MAC entity does not meet the first condition; or if the LCH or the LCG corresponding to the RLC entity associated with the MAC entity has configured and has not triggered the DSR, determining that the MAC entity does not meet the first condition. In this way, the MAC entity that does not meet the first condition may be determined based on one of the foregoing indications, and the PDCP entity may not transmit the delay-critical data volume to the MAC entity that does not meet the first condition.

In some feasible examples, the delay-critical data volume includes a data volume of at least one of the following: delay-critical data for which no PDCP data protocol data unit (protocol data unit, PDU) has been constructed; a PDCP data PDU containing delay-critical data that has not been submitted to a lower layer; a PDCP control PDU; a to-be-retransmitted PDCP service data unit (service data unit, SDU) for an acknowledged mode (acknowledged mode, AM) data radio bearer (data radio bearer, DRB); and a to-be-retransmitted PDCP data PDU for the AM DRB.

In some feasible examples, the RLC entity associated with the first MAC entity is a primary RLC entity or corresponds to a primary path, and the delay-critical data volume transmitted to the first MAC entity includes a data volume of the PDCP control PDU. Alternatively, the RLC entity associated with the first MAC entity is not a primary RLC entity or does not correspond to a primary path, and the delay-critical data volume transmitted to the first MAC entity does not include a data volume of the PDCP control PDU.

It may be understood that when the first MAC entity meets the first condition, regardless of whether the RLC entity associated with the first MAC entity is the primary RLC entity, and regardless of whether the path corresponding to the RLC entity associated with the first MAC entity is the primary path, when the first MAC entity meets the first condition, the delay-critical data volume may be transmitted to the first MAC entity by using the RLC entity associated with the first MAC entity. However, when the RLC entity associated with the first MAC entity is not the primary RLC entity or the RLC entity associated with the first MAC entity does not correspond to the primary path, the delay-critical data volume transmitted to the first MAC entity does not include the PDCP control PDU, that is, may include a data volume excluding the PDCP control PDU in the delay-critical PDCP data volume. When the RLC entity associated with the first MAC entity is the primary RLC entity or the path corresponding to the RLC entity associated with the first MAC entity is the primary path, the delay-critical data volume transmitted to the first MAC entity may include the PDCP control PDU, and may further include a data volume excluding the PDCP control PDU in the delay-critical PDCP data volume.

In some feasible examples, the PDCP entity is associated with two or more RLC entities, or the PDCP entity has configured PDCP duplication.

In some feasible examples, the method further includes: if a total initial transmission data volume of the PDCP entity is greater than a first threshold, transmitting the delay-critical data volume to the first MAC entity that meets the first condition.

It may be understood that when the total initial transmission data volume of the PDCP entity is greater than the first threshold, it indicates that a data volume to be transmitted by the PDCP entity is large and needs to be transmitted downward. Therefore, when the first MAC entity meets the first condition, the PDCP entity may transmit the delay-critical data volume to the first MAC entity. Otherwise, that is, when the total initial transmission data volume of the PDCP entity is less than or equal to the first threshold, it indicates that the data volume to be transmitted by the PDCP entity is small. Regardless of whether the first MAC entity meets the first condition, the PDCP entity may not transmit the delay-critical data volume to the first MAC entity.

In some feasible examples, the first MAC entity that meets the first condition is associated with a primary RLC entity or is associated with a split secondary RLC entity, or a radio bearer associated with the PDCP entity is a split bearer.

In some feasible examples, when the radio bearer is a dual active protocol stack DAPS bearer, if the first MAC entity is associated with a source cell, the delay-critical data volume transmitted to the first MAC entity does not include a data volume of the PDCP control PDU. Alternatively, when the radio bearer is the DAPS bearer, if the first MAC entity is associated with a target cell, the delay-critical data volume transmitted to the first MAC entity includes the data volume of the PDCP control PDU.

It may be understood that, when the radio bearer is a DAPS bearer, regardless of whether the first MAC entity is associated with the source cell or associated with the target cell, when the first RLC entity meets the first condition, the PDCP entity may transmit the delay-critical data volume to the first MAC entity. However, when the first MAC entity is associated with the source cell, the delay-critical data volume transmitted by the PDCP entity to the first MAC entity does not include the PDCP control PDU, that is, may include a data volume excluding the PDCP control PDU in the delay-critical PDCP data volume. When the first MAC entity is associated with the target cell, the delay-critical data volume transmitted by the PDCP entity to the first MAC entity may include the PDCP control PDU, and may further include a data volume excluding the PDCP control PDU in the delay-critical PDCP data volume.

According to a second aspect, an embodiment of this application discloses a second communication method. The communication method may be performed by a PDCP of a terminal device. The method includes: determining whether a path for transmitting a data packet activates protocol data unit (PDU) set importance (PDU set importance, PSI)-discard; and transmitting the data packet to a first path when the first path does not activate the PSI-based discard. The data packet includes a delay-critical data volume. In other words, transmitting a data packet to a path that does not discard a data packet may improve effectiveness of data transmission.

In some feasible examples, before transmitting the data packet to the first path, the method further includes: determining that a total initial transmission data volume of the PDCP entity is greater than a first threshold. In other words, when the first path does not activate PSI-based discard and the total initial transmission data volume of the PDCP entity is greater than the first threshold, the PDCP entity may transmit the data packet through the first path. If the total initial transmission data volume of the PDCP entity is less than or equal to the first threshold, the PDCP entity may not transmit the data packet through the first path.

In some feasible examples, the path includes at least one of the following: an RLC entity or a MAC entity.

In some feasible examples, the path includes a second path, and the second path activates the PSI-based discard.

In some feasible examples, the method further includes: applying a first timer to a data packet of the first path; and applying a second timer to a data packet of the second path. Duration of the first timer is less than duration of the second timer, the first timer and the second timer are used to discard a data packet, and importance of the data packet to which the first timer is applied is lower than importance of the data packet to which the second timer is applied.

It may be understood that the first timer with short duration is applied to a low-importance data packet, and the second timer with long duration is applied to a high-importance data packet, so that the low-importance data packet is preferentially discarded, which may allow the high-importance data packet to be discarded at a later time, thereby improving effectiveness of data transmission.

According to a third aspect, an embodiment of this application discloses a third communication method. The communication method may be performed by a network device, or may be performed by a component (for example, a processor, a chip, or a chip system) in the network device, or may be performed by a logical module or software that can implement all or some functions of the network device. The following uses the network device as an example. The method includes: sending first information. The first information is used to determine whether a path for transmitting a data packet activates PSI-based discard, and the data packet includes a delay-critical data volume. In this way, a path that activates the PSI-based discard and/or a path that does not activate the PSI-based discard may be indicated.

In some feasible examples, the path includes at least one of the following: an RLC entity or a MAC entity.

According to a fourth aspect, an embodiment of this application provides a communication apparatus, including units, modules, or means configured to perform the first aspect, the second aspect, the third aspect, or respective steps in any one of the foregoing aspects.

According to a fifth aspect, an embodiment of this application provides another communication apparatus. The communication apparatus may be a network device, a terminal device, or the like, or may include an apparatus in these devices, for example, a chip, a chip system, or a circuit, or may be an apparatus that can implement related functions. The communication apparatus includes a processor. The processor is configured to execute instructions stored in a memory. When the instructions are executed, the communication method in the first aspect, the second aspect, the third aspect, or the feasible examples in any one of the foregoing aspects is implemented.

In some feasible examples, the communication apparatus further includes one or more of the memory and a transceiver. The transceiver is configured to send and receive data and/or signaling.

According to a sixth aspect, an embodiment of this application discloses a computer-readable storage medium. The computer-readable storage medium stores a computer program. When the computer program is run on one or more processors, the communication method in the first aspect, the second aspect, the third aspect, or the feasible examples in any one of the foregoing aspects is implemented.

According to a seventh aspect, an embodiment of this application discloses a computer program product. The computer program product is configured to store a computer program. When the computer program is run on a computer, the computer is enabled to perform the communication method in the first aspect, the second aspect, the third aspect, or the feasible examples in any one of the foregoing aspects.

According to an eighth aspect, an embodiment of this application discloses a first chip, including a processor and a memory. The processor is configured to invoke, from the memory, instructions stored in the memory and run the instructions, so that a device installed with the chip performs the communication method in the first aspect, the second aspect, the third aspect, or the feasible examples in any one of the foregoing aspects.

According to a ninth aspect, an embodiment of this application discloses a second chip, including: an input interface, an output interface, and a processing circuit. The input interface, the output interface, and the processing circuit are connected through an internal connection path. The processing circuit is configured to perform the communication method in the first aspect, the second aspect, the third aspect, or the feasible examples in any one of the foregoing aspects.

According to a tenth aspect, an embodiment of this application discloses a third chip, including: an input interface, an output interface, and a processor, and further includes a memory. The input interface, the output interface, the processor, and the memory are connected through an internal connection path. The processor is configured to execute code in the memory. When the code is executed, the processor is configured to perform the communication method in the first aspect, the second aspect, the third aspect, or the feasible examples in any one of the foregoing aspects.

According to an eleventh aspect, an embodiment of this application discloses a chip system, including at least one processor, a memory, and an interface circuit. The memory, the transceiver, and the at least one processor are interconnected through a line. The at least one memory stores a computer program. The computer program is executed by the processor to implement the communication method in the first aspect, the second aspect, the third aspect, or the feasible examples in any one of the foregoing aspects.

It should be understood that mutual reference may be made to the implementations and beneficial effects of the foregoing aspects of this application.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a diagram of a structure of a user plane protocol stack according to an embodiment of this application;
FIG. 3 is a diagram of a structure between a PDCP entity and RLC entities according to an embodiment of this application;
FIG. 4 is a diagram of another structure between a PDCP entity and RLC entities according to an embodiment of this application;
FIG. 5 is a diagram of MAC CE signaling according to an embodiment of this application;
FIG. 6 is a schematic flowchart of a communication method according to an embodiment of this application;
FIG. 7 is a schematic flowchart of another communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of a terminal device according to an embodiment of this application.

### DESCRIPTION OF EMBODIMENTS

The technical solutions in embodiments of this application may be applied to various communication systems, for example: a long term evolution (long term evolution, LTE) system, a new radio technology (new radio, NR) system, a public land mobile network (public land mobile network, PLMN) system, a long term evolution advanced (LTE advanced, LTE-A) system, a device-to-device (device-to-device, D2D) communication system, a machine-to-machine (machine to machine, M2M) communication system, an internet of things (internet of things, IoT), a narrowband internet of things (narrow band internet of thing, NB-IoT), an integrated sensing and communication system, a frequency division duplex (frequency division duplex, FDD) system, a time division duplex (time division duplex, TDD) system, a non-terrestrial communication (non-terrestrial communication, NTN) system, a wireless projection communication system, an integrated access and backhaul (integrated access and backhaul, IAB) communication system, and a communication system (for example, a 6G communication system) evolved after a 5G communication system, or may be a non-3rd Generation Partnership Project (3rd generation partnership project, 3GPP) communication system. This is not limited in this application.

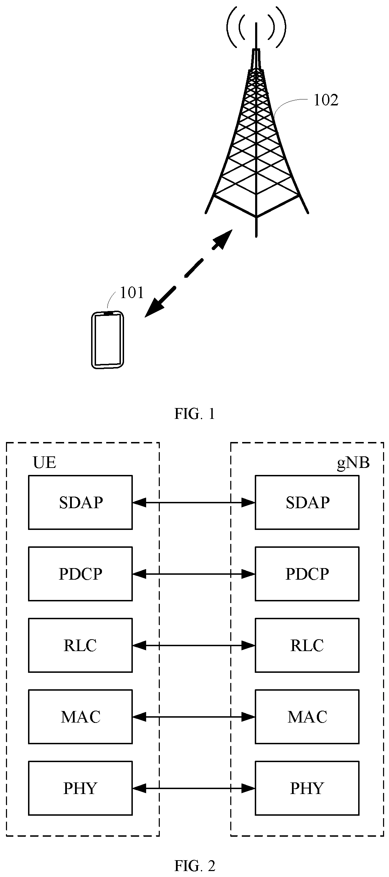

FIG. 1 is a diagram of an architecture of a communication system according to an embodiment of this application. As shown in FIG. 1, a communication system may include at least one terminal device 101 and at least one network device 102. The terminal device 101 may be connected to the network device 102 in a wireless manner. The terminal device 101 may be at a fixed position, or may be movable. The terminal device 101 and the network device 102 may be deployed on land, for example, indoor, outdoor, handheld, or vehicle-mounted. The terminal device 101 and the network device 102 may be deployed on water, or an airplane, a balloon, and a satellite in the air. This is not limited in this application.

In embodiments of this application, the terminal device 101 may be a user-side entity configured to receive or transmit signals. The terminal device 101 may be a mobile phone (mobile phone), a tablet computer (Pad), a computer with a wireless transceiver function, a VR terminal device, an AR terminal device, customer premises equipment (customer premise equipment, CPE), an IoT terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal in integrated sensing and communication, an in-vehicle terminal, a vehicle with a vehicle-to-vehicle (vehicle-to-vehicle, V2X) communication capability, an intelligent connected vehicle, an uncrewed aerial vehicle with an uncrewed-aerial-vehicle (unmanned aerial vehicle, UAV)-to-uncrewed-aerial-vehicle (UAV to UAV, U2U) communication capability, a personal digital assistant (personal digital assistance, PDA), a wireless communication module/chip in various devices such as a smart factory or a smart grid, and the like. This is not limited herein.

The terminal device 101 may sometimes be referred to as user equipment (user equipment, UE), a terminal (terminal), an access terminal, a UE unit, a UE station, a mobile device, a mobile, a mobile station (mobile station), a mobile terminal, a mobile client, a mobile unit (mobile unit), a remote station, a remote terminal device, a remote unit, a wireless unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a PDA, a handheld device with a wireless communication function, a compute device, another processing device connected to a wireless modem, an in-vehicle device, a wearable device, a terminal device in a PLMN evolved after a 5G communication system, a terminal device in a non-public network (non-public network, NPN) evolved after a 5G communication system, or the like. In the 5G communication system, the terminal device 101 may establish a signal connection and a data connection to the network device 102 by using a new air interface technology, to transmit a control signal and service data to a data network.

The network device 102 may be an entity configured to transmit or receive a signal, and is mainly configured to implement functions such as a radio physical control function, resource scheduling and radio resource management, radio access control, and mobility management, and provides a reliable radio transmission protocol, a reliable data encryption protocol, and the like. The network device 102 may support wired access and may further support wireless access, and may be referred to as an access network device below.

Optionally, the access network device may be an access network (access network, AN)/radio access network (radio access network, RAN) device, and includes a plurality of AN/RAN nodes. The AN/RAN node may include but is not limited to: an access point (access point, AP), an enhanced NodeB (enhance NodeB, eNB), a home base station (for example, a home evolved NodeB, or a home NodeB, HNB), a baseband unit (base band unit, BBU), a next-generation NodeB (NR NodeB, gNB), a transmission reception point (transmission reception point, TRP), a transmission point (transmission point, TP), or another access node, for example, a wireless relay node or a wireless backhaul node. Alternatively, the AN/RAN node may be an antenna panel formed by one or more nodes, or may be a network node that forms a gNB or a transmission point, for example, a BBU or a distributed unit (distributed unit, DU), or may be a device that undertakes a base station function in a communication system such as D2D, V2X, M2M, or U2U. Alternatively, the AN/RAN node may be a radio controller in a cloud radio access network (cloud radio access network, CRAN) scenario, or may be an open access network (open RAN, O-RAN, or ORAN), or may be a base station in a communication system evolved after a 5G communication system, for example, an xNodeB in a 6G communication system, or may be an access network device in a PLMN network evolved after a 5G communication system. This is not limited herein.

Main functions of the access network device include: radio resource management, internet protocol (internet protocol, IP) header compression and user data flow encryption, mobility management entity (mobile management entity, MME) selection during attachment of user equipment, routing of user plane data to a serving gateway (service gateway, SGW), paging message organization and sending, broadcast message organization and sending, measurement for a purpose of mobility or scheduling, measurement report configuration, and the like.

Optionally, the network device 102 may further include a core network device, configured to: maintain subscription data of a mobile network, manage a network element of the mobile network, and provide functions such as session management, mobility management, policy management, and security authentication for the terminal device 101.

An NR wireless protocol stack includes two planes, namely a user plane (user plane, UP) and a control plane (control plane, CP). A control plane protocol stack is a protocol stack used for transmitting control signaling of a system, and a user plane protocol stack is a protocol stack used for transmitting user data. Compared with an LTE protocol stack, the NR user plane protocol stack has an additional service data adaptation protocol (service data adaptation protocol, SDAP) layer. An example in which the terminal device is UE and the access network device is a gNB is used for description. As shown in FIG. 2, the user plane protocol stack includes an SDAP layer, a PDCP layer, an RLC layer, a MAC layer, and a PHY layer from top to bottom. The SDAP layer includes a service data application protocol, and its main functions are to mark a quality-of-service (quality of service, Qos) flow identifier in uplink and downlink data packets, and to map a QoS flow to a data radio bearer (data radio bearer, DRB). Data packets on the user plane are mainly transmitted through DRBs. Depending on different QoS flows, data between the UE and the gNB may be carried on a plurality of DRBs.

The PDCP layer is mainly responsible for compressing and decompressing internet protocol (internet protocol, IP) headers, transmitting user data and maintaining sequence numbers (sequence number, SN) (which indicate a sending sequence of data packets) of radio bearers (radio bearer, RB), and processing RRC messages on the control plane and IP packets on the user plane. On the user plane, after obtaining IP data packets from an upper layer, a PDCP sublayer may compress and encrypt the IP data packets, and then submit processed IP data packets to an RLC sublayer. The PDCP sublayer may further provide functions of in-sequence submission and duplicate packet detection for the upper layer based on SNs of PDCP data packets.

The RLC layer communicates with the PDCP layer through an RLC channel and communicates with the MAC layer through a logic channel (logic channel, LCH), and its main functions include segmentation (segmentation) and reassembly (reassembly) of an RLC service data unit (service data unit, SDU), automatic repeat-request (automatic repeat-request, ARQ) error correction, duplicate detection, and the like.

The MAC layer is mainly responsible for processing mapping between logic channels and transport channels and scheduling of radio resources, and its main functions include mapping between logic channels and transport channels, multiplexing, demultiplexing, and scheduling of logic channels, and the like. The PHY layer is located at a bottom layer of an air interface protocol stack, and is mainly responsible for coding, modulation, multi-antenna processing, time-frequency resource mapping, and the like.

The SDAP layer, the PDCP layer, the RLC layer, the MAC layer, and the PHY layer may also be referred to as an SDAP entity, a PDCP entity, an RLC entity, a MAC entity, and a PHY entity, or may be referred to as an SDAP network element, a PDCP network element, an RLC network element, a MAC network element, and a PHY network element, or may be referred to as SDAP, PDCP, RLC, MAC, and PHY for short. It should be understood that the foregoing network element is merely an example. In practice, the network element may be a network element implemented on dedicated hardware, or may be a software instance running on dedicated hardware, or may be a virtualized function instance on an appropriate platform. For example, a virtualized platform may be a cloud platform. In a future communication system, the foregoing network element may have another name. This is not limited in this application.

The access network device may configure whether a PDCP layer of an RB of the terminal device is to duplicate data of the PDCP entity, and send the duplicated data through two or more different paths (for example, two different RLC entities). A PDCP data duplication function may be enabled (that is, activated) or disabled (that is, deactivated) through MAC-control element (MAC-control element, MAC-CE) signaling. When configuring the PDCP data duplication function for the RB, the access network device may configure whether the PDCP data duplication function is to be enabled immediately after the configuration is completed. When the RLC entity is in an activated state, the PDCP entity may send data to the RLC entity.

The PDCP data duplication function may include two bearer types: a split bearer (split bearer, also referred to as a split-path bearer) and a duplicate bearer (duplicate bearer). The split bearer may be understood as a radio bearer that may be associated with two or more transmission paths. That is, data on one split bearer may be transmitted through one or more of transmission paths associated with the split bearer. The duplicate bearer may be understood as that duplicated data (for example, an RRC message) may be transmitted on two or more transmission paths associated with one split bearer, thereby helping improve reliability of data transmission between the access network device and the terminal device.

In the NR user plane protocol stack, the RLC layer communicates with the PDCP layer (or the RRC layer) through an RLC channel (RLC channel), and communicates with the MAC layer through the LCH. RLC configuration is LCH-level configuration and one RLC entity corresponds to only one LCH of one terminal device. Data received by the RLC entity from the PDCP layer or data sent to the PDCP layer is referred to as an RLC service data unit (service data unit, SDU) (or a PDCP protocol data unit (protocol data unit, PDU)). Data received by the RLC entity from the MAC layer or data sent to the MAC layer is referred to as an RLC PDU (or MAC SDU).

The RLC layer includes a transparent mode (transparent mode, TM), an acknowledged mode (acknowledged mode, AM), and an unacknowledged mode (unacknowledged mode, UM). The RLC layer is mainly responsible, in AM and UM modes, for segmentation/reassembly of RLC SDUs, reassembly of RLC SDUs, and discard processing of RLC SDUs under reassembly; and in the AM mode, for error correction through ARQ, duplicate detection (duplicate detection), re-segmentation (re-segmentation) of RLC SDU segments, and protocol error detection. In addition, the RLC layer may be further used to implement transmission of an upper-layer PDU and reconstruction of the RLC layer.

In embodiments of this application, the PDCP entity of the terminal apparatus may be associated with one or more RLC entities. For example, in a standalone (standalone, SA) scenario, one PDCP entity may be associated with one RLC entity. In this way, the PDCP entity may submit data to the RLC entity associated with the PDCP entity, and indicate a PDCP data volume to the MAC entity or a MAC entity associated with the RLC entity.

For another example, in a scenario involving a split bearer, a duplicate bearer, or a dual active protocol stack DAPS bearer, one PDCP entity is associated with two or more PDCP entities. For the duplicate bearer and the split bearer, refer to the foregoing descriptions. Details are not described herein again. By default, RLC entities described in the duplicate bearer and the split bearer are in the activated state.

Optionally, if the terminal device is configured with PDCP duplication (that is, an RB of the PDCP entity is a duplicate bearer), the PDCP entity may submit a data PDU to each activated RLC entity, and submit a control PDU only to a primary RLC (primary RLC) entity.

The RLC entity associated with the PDCP entity may include one primary RLC entity and one or more secondary RLC entities, and the activated RLC entity may include the primary RLC entity. Optionally, the activated RLC entity may further include one or more secondary RLC entities associated with the PDCP entity.

The PDCP entity may indicate the PDCP data volume to a MAC entity associated with the primary RLC entity. The PDCP entity may indicate, to a MAC entity associated with another activated RLC entity, a PDCP data volume excluding the control PDU. The another activated RLC entity includes an RLC entity other than the primary RLC entity in activated RLC entities.

The standard basis may be as follows: indicate the PDCP data volume to the MAC entity associated with the primary RLC entity or primary path; indicate the PDCP data volume excluding the PDCP Control PDU to the MAC entity associated with the RLC entity other than the primary RLC entity or primary path activated for PDCP duplication.

Optionally, the PDCP entity may indicate, to a MAC entity associated with a deactivated RLC entity, that the PDCP data volume is 0.

Optionally, if the terminal device is configured with a split bearer, the PDCP entity may submit data to the primary RLC entity or a split secondary RLC (split secondary RLC) entity when the data volume is large, or the PDCP entity may submit data to the primary RLC entity when the data volume is small.

When the data volume is large, the PDCP entity may indicate the PDCP data volume to the MAC entity associated with the primary RLC entity and to a MAC entity associated with the split secondary RLC entity, and indicate to another RLC entity that the PDCP data volume is 0. The MAC entity associated with the primary RLC entity and the MAC entity associated with the split secondary RLC entity may be a same MAC entity or different MAC entities. When the data volume is small, the PDCP entity may indicate the PDCP data volume to the MAC entity associated with the primary RLC entity, and indicate to another RLC entity that the PDCP data volume is 0.

DAPS handover is a handover procedure in which the terminal device maintains its resource connection to a source gNB after receiving an RRC message containing a handover command and releases the source gNB only after successful random access to a target gNB (DAPS Handover: a handover procedure that maintains the source gNB connection after reception of RRC message for handover and until releasing the source cell after successful random access to the target gNB). Through the DAPS handover, an interruption time caused by handover of the terminal device from a source cell to a target cell can be reduced, and reliability of cell handover of the terminal device can be improved.

It should be noted that the source cell and the target cell in the DAPS handover of the terminal device may be intra-frequency cells. That is, the source cell and the target cell correspond to a same frequency band (band). Certainly, the source cell and the target cell may alternatively be inter-frequency cells. That is, the source cell and the target cell correspond to different frequency bands.

The DAPS bearer is a bearer whose radio protocols are located in both the source gNB and the target gNB during the DAPS handover to use both source gNB and target gNB resources. (DAPS bearer: a bearer whose radio protocols are located in both the source gNB and the target gNB during DAPS handover to use both source gNB and target gNB resources).

In a DAPS bearer scenario, one PDCP entity is associated with at least one lower-layer entity (for example, the RLC entity or the MAC entity) of the PDCP entity in the user plane protocol stack corresponding to the source cell, and is further associated with at least one lower-layer entity (for example, the RLC entity or the MAC entity) of the PDCP entity in the user plane protocol stack corresponding to the target cell.

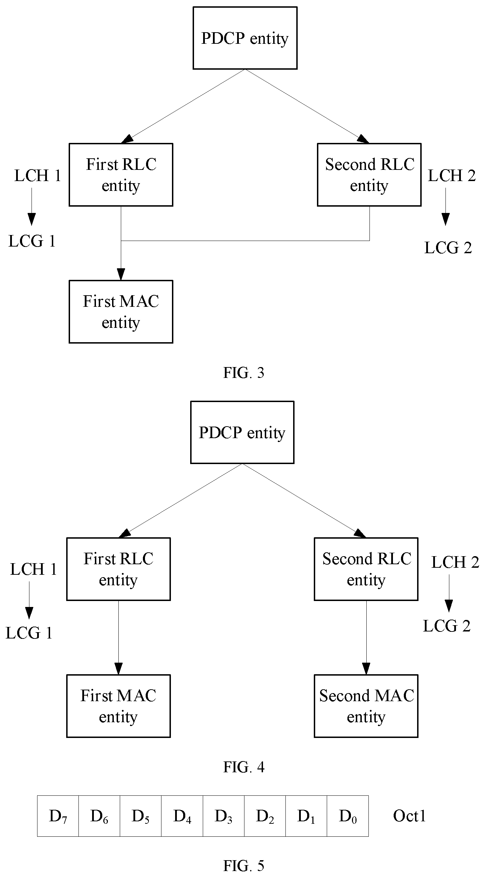

One PDCP entity may be associated with a plurality of RLC entities, and a plurality of RLC entities may be associated with one MAC entity. For example, FIG. 3 is a diagram of a structure between a PDCP entity and MAC entities according to an embodiment of this application. As shown in FIG. 3, the PDCP entity is associated with a first RLC entity and a second RLC entity. Both the first RLC entity and the second RLC entity are associated with a first MAC entity. In other words, both the first RLC entity and the second RLC entity may transmit data or signaling to the first MAC entity.

One or more RLC entities may be associated with different MAC entities. For example, FIG. 4 is a diagram of another structure between a PDCP entity and MAC entities according to an embodiment of this application. As shown in FIG. 4, the PDCP entity is associated with a first RLC entity and a second RLC entity. The first RLC entity is associated with a first MAC entity, and the second RLC entity is associated with a second MAC entity. In other words, the first RLC entity and the second RLC entity are associated with different MAC entities. The first RLC entity and the second RLC entity may transmit different content or same content. When the first RLC entity and the second RLC entity both transmit the same content, a data transmission success rate may be improved. When the first RLC entity and the second RLC entity transmit different content, data transmission efficiency can be improved.

In embodiments of this application, each RLC entity may correspond to at least one LCH, and a logic channel group (logic channel group, LCG) may include at least one LCH. In other words, each LCH of the terminal device may correspond to one RLC entity. The RLC layer may communicate with the PDCP layer through a service access point (service access point, SAP), or may communicate with the MAC layer through the LCH.

For example, as shown in FIG. 3 and FIG. 4, an LCH 1 corresponds to the first RLC entity, and the LCH 1 is an LCH in an LCG 1. An LCH 2 corresponds to the second RLC entity, and the LCH 2 is an LCH in an LCG 2.

In embodiments of this application, communication between the terminal device 101 and the network device 102, communication between network devices 102, and communication between terminal devices 101 may be performed by using a licensed spectrum (licensed spectrum or grantedspectrum), or may be performed by using an unlicensed spectrum (unlicensed spectrum or grant-freespectrum), or may be performed by using both the licensed spectrum and the unlicensed spectrum. A spectrum resource used by the terminal device 101 and the network device 102 is not limited in this application. Uplink (uplink, UL) communication or downlink (downlink, DL) communication between the terminal device 101 and the network device 102 may be performed through a user equipment-user equipment (user equipment-user equipment, UU) interface, and sidelink (sidelink, SL) communication between terminal devices 101 may be performed through a sidelink interface (PC5 interface).

Two terminal devices 101 may be located within coverage areas of different network devices 102, and the two terminal devices 101 may be located within a coverage area of a same network device 102. If a single terminal device 101 is located within a same coverage area of two network devices 102, multi-station coordinated transmission may be performed by using the two network devices 102. It should be understood that when both the two network devices 102 send same data and/or information to the terminal device 101, communication reliability can be improved.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory device (for example, erasable programmable read-only memory (erasable programmable read-only memory, EPROM), a card, a stick, or a key drive). The various storage media described in this specification may represent one or more devices and/or other machine-readable media for storing information. The term "machine-readable medium" may include but is not limited to a radio channel, and various other media that can store, contain and/or carry instructions and/or data.

It should be noted that quantities and types of network devices and terminal devices included in the network architecture shown in FIG. 1 are merely examples, and embodiments of this application are not limited thereto. For example, more or fewer terminal devices that communicate with the network device may be included. For another example, more or fewer core network devices that communicate with the network device may be included. For conciseness of description, this is not described one by one in the accompanying drawings.

In FIG. 1, FIG. 2, or FIG. 3, although the network device and the terminal device are shown, the application scenario may include but is not limited to the network device and the terminal device, for example, may further include a device configured to carry a virtualized network function. These are obvious to persons of ordinary skill in the art, and details are not described herein again.

For ease of understanding of embodiments of this application, the following first provides definitions of technical terms that may appear in embodiments of this application. Terms used in implementations of this application are merely intended to explain specific embodiments of this application, instead of limiting this application.
(1) Extended reality XR may be a term for different types of reality. For example, XR may refer to all real and virtual combined environments and human-machine interactions generated by computer technologies and wearable devices. XR services may include but are not limited to the following representative forms and their application domains: augmented reality (augmented reality, AR), mixed reality (mixed reality, MR), and virtual reality (virtual reality, VR).
   To improve user experience in interaction between humans and the virtual world, the XR services impose strict requirements on bandwidth and latency. In embodiments of this application, XR data may be data related to the XR services. A transmission delay requirement for the XR data/services is high. For example, a delay requirement for the uplink XR data may be 30 ms.
(2) A delay status report (delay status report, DSR) is a delay status reported by the terminal device to the network device, and may be specifically a delay status of an LCG provided by the terminal device to a serving gNB (The Delay Status Reporting (DSR) procedure is used to provide the serving gNB with delay status of LCGs). The delay status in the delay status report is reported at a granularity of an LCG or an LCH. The LCG is used as an example.

Optionally, the delay status of the LCG includes a remaining time (remaining time) and a data volume of a data packet in the LCG.

The remaining time may be a minimum value among data packets (for example, SDUs) buffered in the LCG whose remaining time is less than a threshold (for example, a remaining time threshold (*remainingTimeThreshold*)). The remaining time may be obtained by timing (counting down) the remaining time threshold using discard timers (*discardTimer*) applied (activated or enabled) by the PDCP entity for respective data packets. That is, the minimum remaining time is a minimum remaining value of discard timers of the data packets buffered in the LCG. A data volume of data packets in the LCG may be a data volume of data packets in the LCG whose remaining time is less than the remaining time threshold, and may be specifically a total data volume of delay-critical uplink data (delay-critical UL data) in the LCG. The total data volume of the delay-critical uplink data is obtained according to a data volume calculation procedure (This delay status for an LCG includes remaining time, which is the smallest remaining value of the PDCP *discardTimer*s among SDUs buffered for the LCG as specified in clause 7.3 in TS 38.323 [4], and the total amount of delay-critical UL data for the LCG according to the data volume calculation procedure specified in clause 5.5 in TS 38.322 [3] and clause 5.6 in TS 38.323 [4] for the associated RLC and PDCP entities, respectively).

An RRC control instruction controls a DSR procedure through configuration, for example, by configuring a remaining time threshold for triggering reporting of a DSR for an LCG (RRC controls the DSR procedure by configuring the following parameter: *remainingTimeThreshold*: the threshold on remaining time for triggering a DSR for an LCG).

When an LCG is configured for a DSR, the MAC entity shall: if a minimum remaining value of the discard timers applied by the PDCP entity among all data packets buffered in the LCG that have not been transmitted in any MAC PDU and have not been reported as a data volume in DSR MAC control element (control element, CE) signaling is less than the remaining time threshold of the LCG; and if the LCG has not reported a DSR since the last transmission of a DSR MAC CE, trigger a DSR for the LCG (If an LCG is configured for delay status reporting, the MAC entity shall: if the smallest remaining value of the PDCP *discardTimer*s among all the data buffered for the LCG that has not been transmitted in any MAC PDU or reported as data volume in a DSR MAC CE becomes below *remainingTimeThreshold* of the LCG; and if there is no DSR pending for the LCG since the last transmission of a DSR MAC CE: trigger a DSR for the LCG).

In embodiments of this application, the remaining time may also be referred to as remaining duration or a remaining delay. Correspondingly, the remaining time threshold may also be referred to as a remaining duration threshold or a remaining delay threshold.

For example, if the LCG 1 is configured with DSR reporting, the LCG 1 may trigger the DSR, and the DSR is enabled for the LCG 1. In this case, if there exists a data packet in the LCG 1 whose remaining time is less than the remaining time threshold, the DSR reporting is triggered. When resources are available, the DSR is sent, and the DSR includes a minimum remaining time of the data packets in the LCG 1 and a data volume of each data packet in the LCG 1 whose remaining time is less than the remaining time threshold.

In embodiments of this application, a data packet whose remaining time is less than the remaining time threshold may be understood as a data packet with an insufficient delay. In current XR standards, data packet-based delay information reporting has been introduced. For example, a delay-critical (delay-critical) data volume (data volume) of a data packet whose remaining time is less than a threshold is reported through the DSR. The delay-critical data volume may also be referred to as a delay-sensitive data volume, or may be referred to as a latency-critical data volume or a latency-sensitive data volume.

Optionally, the delay-critical data volume may include a delay-critical PDCP data volume (delay-critical PDCP data volume), a delay-critical RLC data volume (delay-critical RLC data volume), or the like.

The delay-critical PDCP data is PDCP data whose timeout duration of a discard timer is less than the remaining time threshold (remainingTimeThreshold) if a PDU discard configuration (*pdu-SetDiscard*) is not configured. If the PDU discard configuration is configured, and the PDCP data belongs to a PDU set, and a remaining time of the discard timer of the PDCP data till timer expiry in the PDU set is less than the remaining time threshold, the PDCP data is the delay-critical PDCP data (Delay-critical PDCP SDU: if pdu-SetDiscard is not configured, a PDCP SDU for which the remaining time till discardTimer expiry is less than the remainingTimeThreshold. If pdu-SetDiscard is configured, a PDCP SDU belonging to a PDU Set of which at least one PDCP SDU has the remaining time till discardTimer expiry less than the remainingTimeThreshold).

If a PDCP SDU becomes a delay-critical PDCP SDU and a corresponding PDCP data PDU has already been submitted to a lower layer, a delay-critical indication for the PDCP data PDU is provided to the lower layer (for example, the RLC entity) (If a PDCP SDU becomes a delay-critical PDCP SDU, and if the corresponding PDCP Data PDU has already been submitted to lower layers, the delay-critical indication for the PDCP Data PDU is provided to lower layers).

Optionally, for DSR reporting by the terminal device, the PDCP entity of the terminal device (or the terminal device) may transmit a delay-critical PDCP data volume. The delay-critical PDCP data volume includes at least one of the following (the transmitting PDCP entity shall consider the following as delay-critical PDCP data volume):
1. delay-critical data for which no PDCP data PDU has been constructed (the delay-critical PDCP SDUs for which no PDCP Data PDUs have been constructed);
2. a PDCP data PDU containing delay-critical data that has not been submitted to a lower layer (for example, the RLC layer) (the PDCP Data PDUs that contain the delay-critical PDCP SDUs and have not been submitted to lower layers);
3. a PDCP control PDU (the PDCP Control PDUs);
4. a to-be-retransmitted PDCP SDU for an AM DRB (for AM DRBs, the PDCP SDUs to be retransmitted); or
5. a to-be-retransmitted PDCP data PDU for the AM DRB (for AM DRBs, the PDCP Data PDUs to be retransmitted).

In embodiments of this application, the delay-critical RLC data volume is a data volume obtained by the RLC entity by processing a delay-associated PDCP data volume received from the PDCP entity, and the data volume is to be sent to a lower layer (for example, the MAC layer). Optionally, for DSR reporting by the terminal device, the RLC entity of the terminal device (or the terminal device) may transmit a delay-critical RLC data volume. The delay-critical RLC data volume includes at least one of the following:
1. a delay-critical RLC SDU and/or a delay-critical RLC SDU segment not contained in the RLC data PDU;
2. an RLC data PDU awaiting initial transmission, where the RLC data PDU contains a delay-critical RLC SDU and/or a delay-critical RLC SDU segment;
3. an RLC data PDU (RLC AM) awaiting retransmission; and
4. an RLC control PDU.

(3) The second RLC entity may also be referred to as a split secondary RLC entity (split secondary RLC entity, or referred to as a split second RLC entity). The second RLC entity is an RLC entity, other than the primary RLC entity, that is responsible for split bearer operations in dual connectivity. If the PDCP entity is associated with two RLC entities, the split secondary RLC entity is an RLC entity other than the primary RLC entity. If the PDCP entity is associated with more than two RLC entities, the split secondary RLC entity is configured by an upper layer (in dual connectivity, the RLC entity other than the primary RLC entity which is responsible for split bearer operation. If the PDCP entity is associated with two RLC entities, the split secondary RLC entity is the RLC entity other than the primary RLC entity. If the PDCP entity is associated with more than two RLC entities, the split secondary RLC entity is configured by upper layers).

(4) Signaling for PDU set importance (PDU set importance, PSI)-based data packet (such as an SDU) discard activation or deactivation may be MAC CE signaling, indicated by a MAC subheader identifier through a one-octet eLCID (The PSI-Based SDU Discard Activation/Deactivation MAC CE is identified by MAC subheader with a one-octet eLCID as specified in Table 6.2.1-1b).

In embodiments of this application, the PSI-based data packet discard activation refers to a case in which the signaling for PSI-based data packet discard activation or deactivation indicates discard activation, or does not indicate discard deactivation. The PSI-based data packet discard deactivation refers to a case in which the signaling for PSI-based data packet discard activation or deactivation indicates discard deactivation, or does not indicate discard activation. The PSI-based data packet discard activation may also be referred to as data packet discard activation based on PSI, a PSI-based data packet being in a discard activated state, data packet activation based on PSI discard, or the like. The PSI-based data packet discard deactivation may also be referred to as data packet discard deactivation based on PSI, a PSI-based data packet being in a discard deactivated state, a data packet not being activated based on PSI discard, data packet deactivation based on PSI discard, or the like.

For example, FIG. 5 is a diagram of MAC CE signaling according to an embodiment of this application. As shown in FIG. 5, the MAC CE has a fixed size, and includes one 8-bit byte. For example, Oct1 includes 8 bytes of D₀ to D₇. In each byte, a Di field indicates whether a PSI-based data packet for DRB i is in a discard activated state or a discard deactivated state, where i is an ascending order of DRB IDs in DRBs configured with PSI-based data packet discard (Dᵢ: This field indicates the activation/deactivation status of the PSI-based SDU discard of DRB i, where i is the ascending order of the DRB ID among the DRBs configured with PSI-based SDU discard). In other words, the Di field indicates that the PSI-based data packet for an i^{th} DRB is in the discard activated state or the discard deactivated state.

For example, a value of the Di field is 1, indicating that the PSI-based data packet discard is activated for the DRB i. A value of the Di field is 0, indicating that the PSI-based data packet discard is deactivated for the DRB i (The Di field set to 1 indicates that the PSI-based SDU discard shall be activated for DRB i. The Di field set to 0 indicates that the PSI-based SDU discard shall be deactivated for DRB i).

Each RB (DRB) corresponds to one PDCP entity. When the PDCP entity receives a data packet (PDCP SDU) from an upper layer, if the PSI-based data packet discard is activated and a discard timer for low importance (discardTimerForLowImportance) is configured, it indicates that the data packet belongs to a low importance PDU set, and the transmitting PDCP entity should start the discard timer for low importance associated with the data packet. Otherwise, when the PSI-based data packet discard is deactivated or no discard timer for low importance is configured, if a discard timer (discardTimer) is configured, the transmitting PDCP entity should start the second timer associated with the data packet (At reception of a PDCP SDU from upper layers, the transmitting PDCP entity shall: if *discardTimerForLowImportance* is configured and PSI based SDU discard is activated, and the PDCP SDU belongs to a low importance PDU Set: start the *discardTimerForLowImportance* associated with this PDCP SDU; else: start the *discardTimer* associated with this PDCP SDU (if configured)).

In embodiments of this application, duration of the discard timer for low importance is less than duration of the discard timer.

When one PDCP entity is associated with one RLC entity, the PDCP entity directly sends data packet-based delay information to a MAC entity of the associated RLC entity. When one PDCP entity is associated with a plurality of RLC entities, different RLC entities may be associated with different MAC entities. Currently, there is no specification defining how the PDCP entity transmits the delay information to the MAC entity under such a circumstance.

Based on this, an embodiment of this application provides a communication method, so that a delay-critical data volume can be sent to a MAC entity that meets a first condition, thereby improving effectiveness of data transmission.

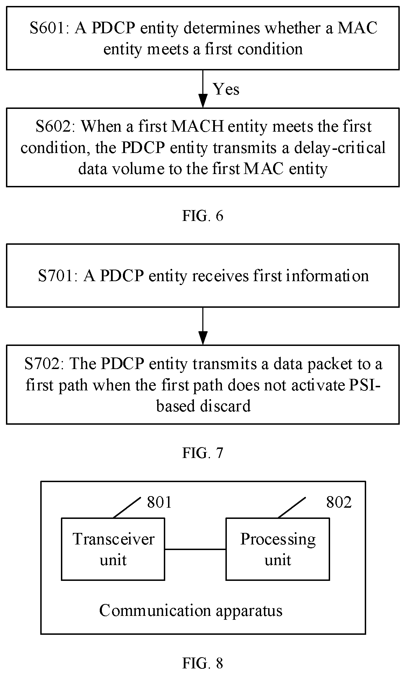

FIG. 6 is a schematic flowchart of the communication method according to an embodiment of this application. The method may be applied to a PDCP entity of a terminal device. For the PDCP entity, refer to the descriptions of the PDCP entity shown in FIG. 2, FIG. 3, or FIG. 4. When the PDCP entity is the PDCP entity of the UE shown in FIG. 2, an RLC entity may be an RLC entity of the UE, and a MAC entity may be a MAC entity of the UE. As shown in FIG. 6, the method includes steps S601 and S602.

S601: The PDCP entity determines whether the MAC entity meets a first condition.

In this embodiment of this application, the first condition is used to determine whether to send a delay-critical data volume.

In some feasible examples, the delay-critical data volume may include a data volume of at least one of the following: delay-critical data for which no PDCP data PDU has been constructed; a PDCP data PDU containing delay-critical data that has not been submitted to a lower layer; a PDCP control PDU; a to-be-retransmitted PDCP SDU for an AM DRB; and a to-be-retransmitted PDCP data PDU for the AM DRB. The delay-critical data volume may be understood as the foregoing delay-critical PDCP data volume. Details are not described herein again.

This application imposes no limitation on the first condition. In some feasible examples, step S601 may include at least one of the following cases:
Case 1: If the MAC entity has configured and triggered a DSR, it is determined that the MAC entity meets the first condition.
Case 2: If the MAC entity has not configured the DSR, it is determined that the MAC entity does not meet the first condition.
Case 3: If the MAC entity has configured and has not triggered the DSR, it is determined that the MAC entity does not meet the first condition.
Case 4: If an RLC entity associated with the MAC entity has configured and triggered the DSR, it is determined that the MAC entity meets the first condition.
Case 5: If the RLC entity associated with the MAC entity has not configured the DSR, it is determined that the MAC entity does not meet the first condition.
Case 6: If the RLC entity associated with the MAC entity has configured and has not triggered the DSR, it is determined that the MAC entity does not meet the first condition.
Case 7: If an LCH or an LCG corresponding to the RLC entity associated with the MAC entity has configured and triggered the DSR, it is determined that the MAC entity meets the first condition.
Case 8: If the LCH or the LCG corresponding to the RLC entity associated with the MAC entity has not configured the DSR, it is determined that the MAC entity does not meet the first condition.
Case 9: If the LCH or the LCG corresponding to the RLC entity associated with the MAC entity has configured and has not triggered the DSR, it is determined that the MAC entity does not meet the first condition.

In embodiments of this application, the MAC entity that meets the first condition may be referred to as a first MAC entity, and the MAC entity that does not meet the first condition is referred to as a second MAC entity. This application imposes no limitation on a condition in which the MAC entity, the RLC entity, the LCH, or the LCG triggers the DSR. Reference may be made to the foregoing descriptions. When the first MAC entity determines that a remaining time of a data packet in the LCG or the LCH corresponding to the RLC entity associated with the first MAC entity is less than a remaining time threshold, it is determined that the first MAC entity has triggered the DSR, or it is determined that the RLC entity associated with the first MAC entity has triggered the DSR, or it is determined that the LCG or the LCH corresponding to the RLC entity associated with the first MAC entity has triggered the DSR.

It should be understood that a prerequisite for triggering the DSR by the first MAC entity is that the first MAC entity has configured the DSR. A prerequisite for triggering the DSR by the RLC entity associated with the first MAC entity is that the RLC entity has configured the DSR. A prerequisite for triggering the DSR by the LCH or the LCG corresponding to the RLC entity associated with the first MAC entity is that the LCH or the LCG has configured the DSR. In other words, when the first MAC entity has configured the DSR and the first MAC entity has triggered the DSR, or when the RLC entity associated with the first MAC entity has configured the DSR and the RLC entity has triggered the DSR, or when the LCG or the LCH corresponding to the RLC entity associated with the first MAC entity has configured the DSR and the LCG or the LCH has triggered the DSR, the PDCP entity may send the delay-critical data volume to the first MAC entity. Otherwise, when the first MAC entity has configured the DSR and the first MAC entity has not triggered the DSR, or when the first MAC entity has not configured the DSR, it indicates that the delay-critical data volume does not need to be transmitted, and the PDCP entity may not send the delay-critical data volume to the first MAC entity. Alternatively, when the RLC entity associated with the first MAC entity has configured the DSR and the RLC entity has not triggered the DSR, or when the RLC entity has not configured the DSR, it indicates that the delay-critical data volume does not need to be transmitted, and the PDCP entity may not send the delay-critical data volume to the first MAC entity. Alternatively, when the LCG or the LCH corresponding to the RLC entity associated with the first MAC entity has configured the DSR and neither the LCG nor the LCH has triggered the DSR, or when the LCG or the LCH corresponding to the RLC entity associated with the first MAC entity has not configured the DSR, it indicates that the delay-critical data volume does not need to be transmitted, and the PDCP entity may not send the delay-critical data volume to the first MAC entity.

The following separately describes, with reference to different scenarios, how the PDCP entity transmits the delay-critical data volume when the PDCP entity is associated with at least two RLC entities. A first RLC entity and a second RLC entity are used as examples of the at least two RLC entities.

Scenario 1: Refer to FIG. 4. When the first MAC entity has configured the DSR and the first MAC entity has triggered the DSR, it indicates that the delay-critical data volume needs to be transmitted to the first MAC entity, and therefore, the PDCP entity may send the delay-critical data volume to the first MAC entity by using the first RLC entity. When the first RLC entity associated with the first MAC entity has configured the DSR and the first RLC entity has triggered the DSR, or when the LCG 1 or the LCH 1 corresponding to the first RLC entity has configured the DSR and the LCG 1 or the LCH 1 has triggered the DSR, it indicates that the delay-critical data volume needs to be transmitted to the first MAC entity associated with the first RLC entity, and therefore, the PDCP entity may send the delay-critical data volume to the first MAC entity by using the first RLC entity. When the second MAC entity has not configured the DSR, or when the second MAC entity has configured the DSR and the second MAC entity has not triggered the DSR, it indicates that the delay-critical data volume does not need to be sent to the second MAC entity, and therefore, the PDCP entity does not transmit the delay-critical data volume to the second MAC entity. When the second RLC entity has not configured the DSR, or when the second RLC entity has configured the DSR and the second RLC entity has not triggered the DSR, it indicates that the delay-critical data volume does not need to be transmitted to the second MAC entity associated with the second RLC entity, and therefore, the PDCP entity does not send the delay-critical data volume to the second MAC entity by using the second RLC entity. When the LCH 2 or the LCG 2 corresponding to the second RLC entity has not configured the DSR, or when the LCH 2 or the LCG 2 corresponding to the second RLC entity has configured the DSR and has not triggered the DSR, it indicates that the delay-critical data volume does not need to be transmitted to the second MAC entity associated with the second RLC entity, and therefore, the PDCP entity does not send the delay-critical data volume to the second MAC entity by using the second RLC entity.

In the example in FIG. 4, at least two RLC entities associated with the PDCP entity are respectively associated with different MAC entities. Actually, the at least two RLC entities associated with the PDCP entity may be associated with a same MAC entity.

Scenario 2: Refer to FIG. 3. The first MAC entity is associated with the first RLC entity and the second RLC entity. When the first MAC entity has configured and triggered the DSR, it is determined that the first MAC entity meets the first condition, and the delay-critical data volume may be transmitted to the first MAC entity by using the first RLC entity and/or the second RLC entity. When the first RLC entity has configured and triggered the DSR, or when the LCG 1 or the LCH 1 corresponding to the first RLC entity has configured the DSR and the LCG 1 or the LCH 1 has triggered the DSR, it indicates that the first RLC entity may transmit the delay-critical data volume to the first MAC entity, and therefore, the PDCP entity may send the delay-critical data volume to the first MAC entity associated with the first RLC entity by using the first RLC entity. When the first MAC entity has not configured the DSR, or when the first MAC entity has configured the DSR and has not triggered the DSR, the delay-critical data volume may not be transmitted to the MAC entity. When the second RLC entity has not configured the DSR, or when the second RLC entity has configured the DSR and has not triggered the DSR, it indicates that the second RLC entity may not send the delay-critical data volume to the first MAC entity associated with the second RLC entity, and therefore, the PDCP entity may not send time domain-critical data volume to the first MAC entity associated with the second RLC entity by using the second RLC entity. When the LCG 2 or the LCH 2 corresponding to the second RLC entity has not configured the DSR, or when the LCG 2 or the LCH 2 has configured the DSR and the LCG 2 or the LCH 2 has not triggered the DSR, it indicates that the second RLC entity may not send the delay-critical data volume to the first MAC entity associated with the second RLC entity, and therefore, the PDCP entity may not send the time domain-critical data volume to the first MAC entity associated with the second RLC entity by using the second RLC entity.

It may be understood that, when the PDCP entity is associated with at least two RLC entities and the RLC entities are associated with a same MAC entity, the delay-critical data volume may be transmitted to the MAC entity by using at least one RLC entity associated with the MAC entity that has configured and triggered the DSR, and the delay-critical data volume may not be transmitted to the MAC entity that has not configured the DSR, or the delay-critical data volume may not be transmitted to the MAC entity that has configured the DSR and has triggered the DSR. Alternatively, the delay-critical data volume may be transmitted to the MAC entity associated with the RLC entity that has configured and triggered the DSR, and the delay-critical data volume may not be transmitted to the MAC entity associated with the RLC entity that has not configured the DSR, or the delay-critical data volume may not be transmitted to the MAC entity associated with the RLC entity that has configured the DSR and has not triggered the DSR. Alternatively, the delay-critical data volume may be transmitted to the MAC entity associated with the RLC entity corresponding to the LCH or the LCG that has configured and triggered the DSR, and the delay-critical data volume may not be transmitted to the MAC entity associated with the RLC entity corresponding to the LCH or LCG that has configured the DSR, or the delay-critical data volume may not be transmitted to the MAC entity associated with the RLC entity corresponding to the LCH or LCG that has configured the DSR and has not triggered the DSR. In this way, effectiveness of data transmission can be improved.

When the PDCP entity is associated with at least two RLC entities and the RLC entities are respectively associated with different MAC entities, the delay-critical data volume may be transmitted to the MAC entity by using the RLC entity associated with the MAC entity that has configured and triggered the DSR, and the delay-critical data volume may not be transmitted to the MAC entity that has not configured the DSR, or the delay-critical data volume may not be transmitted to the MAC entity that has configured the DSR and has not triggered the DSR. Alternatively, the delay-critical data volume may be transmitted to the MAC entity associated with the RLC entity that has configured and triggered the DSR, and the delay-critical data volume may not be transmitted to the MAC entity associated with the RLC entity that has not configured the DSR, or the delay-critical data volume may not be transmitted to the MAC entity associated with the RLC entity that has configured the DSR and has not triggered the DSR. Alternatively, the delay-critical data volume may be transmitted to the MAC entity associated with the RLC entity corresponding to the LCH or the LCG that has configured and triggered the DSR, and the delay-critical data volume may not be transmitted to the MAC entity associated with the RLC entity corresponding to the LCH or LCG that has configured the DSR, or the delay-critical data volume may not be transmitted to the MAC entity associated with the RLC entity corresponding to the LCH or LCG that has configured the DSR and has not triggered the DSR. In this way, effectiveness of data transmission can be improved.

S602: When the first MACH entity meets the first condition, the PDCP entity transmits the delay-critical data volume to the first MAC entity.

Correspondingly, the first MAC entity receives the delay-critical data volume from the PDCP entity. Specifically, the first MAC entity receives the delay-critical data volume from the PDCP entity by using the first RLC entity.

The delay-critical data volume sent by the PDCP entity to the first RLC entity may be a delay-critical PDCP data volume. A delay-critical data volume sent by the first RLC entity to the first MAC entity may be a delay-critical RLC data volume. For the delay-critical PDCP data volume and the time domain-critical RLC data volume, refer to the foregoing descriptions. Details are not described herein again.

It may be understood that, in the method shown in FIG. 6, the PDCP entity can send the delay-critical data volume to the MAC entity that meets the first condition, thereby improving effectiveness of data transmission.

It should be noted that the foregoing two scenarios are merely examples. Actually, another manner may be further included to determine whether to transmit the delay-critical data volume and a data type of the transmitted delay-critical data volume. For example, different methods may be described with reference to the foregoing three bearer cases.

Case 1: If the RLC entity associated with the first MAC entity is a primary RLC entity or corresponds to a primary path, the delay-critical data volume transmitted by the PDCP entity to the first MAC entity includes a PDCP control PDU data volume. Alternatively, if the RLC entity associated with the first MAC entity is not the primary RLC entity or does not correspond to the primary path, the delay-critical data volume transmitted by the PDCP entity to the first MAC entity does not include the PDCP control PDU.

That the RLC entity associated with the first MAC entity corresponds to the primary path may be understood as that a data transmission path among the PDCP entity, the RLC entity associated with the first MAC entity, and the first MAC entity is the primary path. That is, the RLC entity associated with the first MAC entity is a primary RLC entity. The primary path corresponding to the PDCP entity or the primary RLC entity may be configured by a network device, or may be determined based on signal strength, signal coverage, and the like of the path. This is not limited herein.

In some feasible examples, Case 1 is applicable to a scenario in which the PDCP entity is associated with two or more RLC entities, or the PDCP entity is configured with PDCP duplication. That the PDCP entity is configured with the PDCP duplication means that a radio bearer associated with the PDCP entity is a duplicate bearer.

Optionally, before the PDCP entity transmits the delay-critical data volume to the first MAC entity, the method further includes: The terminal device receives an indication A from the network device.

Correspondingly, the network device sends the indication A to the terminal device.

The indication A may be sent by the network device to the terminal device in a form of unicast, or may be sent by the network device in a form of broadcast, or may be sent by the network device to a specified terminal in a form of multicast or multicast. This is not limited herein. First indication information may be system information, or may be configuration information, or the like.

The indication A may include predefined information or configured signaling. For example, the first indication information may include at least one of the following: MAC CE signaling, downlink control information (downlink control information, DCI), radio resource control (radio resource control, RRC) signaling, a system information block (system information block, SIB), and the like.

The indication A indicates that, when the MAC entity is not associated with the primary RLC entity or the associated RLC entity does not correspond to the primary path, the delay-critical data volume transmitted by the PDCP entity to the first MAC entity does not include the PDCP control PDU. In other words, in the case of a PDCP duplicate bearer, a PDCP data volume is indicated to the MAC entity associated with the primary RLC entity or the primary path. When the MAC entity is not associated with the primary RLC entity or the primary path, it indicates that the PDCP data volume does not include the PDCP control PDU.

It may be understood that in Case 1, regardless of whether the RLC entity associated with the first MAC entity is the primary RLC entity, and regardless of whether the path corresponding to the RLC entity associated with the first MAC entity is the primary path, when the first MAC entity meets the first condition, the delay-critical data volume may be transmitted to the first MAC entity by using the RLC entity associated with the first MAC entity. However, when the RLC entity associated with the first MAC entity is not the primary RLC entity or the RLC entity associated with the first MAC entity does not correspond to the primary path, the delay-critical data volume transmitted to the first MAC entity does not include the PDCP control PDU, that is, may include a data volume excluding the PDCP control PDU in the delay-critical PDCP data volume. When the RLC entity associated with the first MAC entity is the primary RLC entity or the path corresponding to the RLC entity associated with the first MAC entity is the primary path, the delay-critical data volume transmitted to the first MAC entity may include the PDCP control PDU, and may further include a data volume excluding the PDCP control PDU in the delay-critical PDCP data volume.

Case 2: If a total initial transmission data volume of the PDCP entity is greater than a first threshold, the PDCP entity transmits the delay-critical data volume to the first MAC entity that meets the first condition.

The total initial transmission data volume of the PDCP entity may be understood as a data volume to be transmitted by the PDCP entity to a lower layer and a data volume to be transmitted to an upper layer, or may be understood as a data volume to be transmitted by the PDCP entity to the lower layer and a data volume to be transmitted by the RLC entity to the lower layer. The RLC entity may include the first RLC entity and the second RLC entity.

This application imposes no limitation on a type of the first MAC entity. In some feasible examples, the first MAC entity that meets the first condition is associated with the primary RLC entity or associated with a split secondary RLC entity. In other words, the first RLC entity may be a primary RLC entity, or may be a split secondary RLC entity. For the split secondary RLC entity, refer to the foregoing descriptions. Details are not described herein again. In this way, when the first MAC entity is associated with the primary RLC entity or associated with the split secondary RLC entity, if the total initial transmission data volume of the PDCP entity is greater than the first threshold, the PDCP entity may transmit the delay-critical data volume to the first MAC entity that meets the first condition.

In some feasible examples, Case 2 may be applied to a scenario in which a radio bearer associated with the PDCP entity is a split bearer.

Optionally, if the total initial transmission data volume of the PDCP entity is less than or equal to the first threshold, the PDCP entity does not transmit the delay-critical data volume to the first MAC entity.

It may be understood that in Case 2, if the total initial transmission data volume of the PDCP entity is greater than the first threshold, it indicates that a data volume to be transmitted by the PDCP entity is large and needs to be transmitted downward. Therefore, when the first MAC entity meets the first condition, the PDCP entity may transmit the delay-critical data volume to the first MAC entity. Otherwise, that is, when the total initial transmission data volume of the PDCP entity is less than or equal to the first threshold, it indicates that the data volume to be transmitted by the PDCP entity is small. Regardless of whether the first MAC entity meets the first condition, the PDCP entity may not transmit the delay-critical data volume to the first MAC entity.

It should be noted that, in the foregoing example, when the total initial transmission data volume of the PDCP entity is equal to the first threshold, the delay-critical data volume is not transmitted to the first MAC entity. Actually, when the total initial transmission data volume of the PDCP entity is equal to the first threshold, the delay-critical data volume may be transmitted to the first MAC entity.

Case 3: The radio bearer is a DAPS bearer. If the first MAC entity is associated with a source cell, the delay-critical data volume transmitted by the PDCP entity to the first MAC entity does not include the PDCP control PDU. Alternatively, if the first MAC entity is associated with a target cell, the delay-critical data volume transmitted by the PDCP entity to the first MAC entity includes the PDCP control PDU.

It may be understood that, when the radio bearer is a DAPS bearer, regardless of whether the first MAC entity is associated with the source cell or associated with the target cell, when the first RLC entity meets the first condition, the PDCP entity may transmit the delay-critical data volume to the first MAC entity. However, when the first MAC entity is associated with the source cell, the delay-critical data volume transmitted by the PDCP entity to the first MAC entity does not include the PDCP control PDU, that is, may include a data volume excluding the PDCP control PDU in the delay-critical PDCP data volume. When the first MAC entity is associated with the target cell, the delay-critical data volume transmitted by the PDCP entity to the first MAC entity may include the PDCP control PDU, and may further include a data volume excluding the PDCP control PDU in the delay-critical PDCP data volume.

It should be noted that the foregoing three cases are used as examples with reference to the three bearer types. If there is another bearer type in the future, reference may be made to this manner for implementation, or another manner may be used for implementation.

The PDCP entity can determine a congestion status of a path. An embodiment of this application provides another communication method, so that the delay-critical data volume can be transmitted to a first path for which PSI-based discard is not activated or the PSI-based discard is deactivated, thereby improving effectiveness of data transmission.

FIG. 7 is a schematic flowchart of another communication method according to an embodiment of this application. As shown in FIG. 7, the method may be applied to a PDCP entity of a terminal device. For the PDCP entity, refer to the descriptions of the PDCP entity shown in FIG. 2, FIG. 3, or FIG. 4. When the PDCP entity is the PDCP entity of the UE shown in FIG. 2, an RLC entity may be an RLC entity of the UE, and a MAC entity may be a MAC entity of the UE. As shown in FIG. 7, the method includes steps S701 and S702.

S701: The PDCP entity receives first information.

Specifically, a network device sends the first information to the terminal device, so that the PDCP entity receives the first information.

In this embodiment of this application, the first information is used to determine whether a path for transmitting a data packet activates the PSI-based discard, and the data packet includes a delay-critical data volume. For the delay-critical data volume, refer to the foregoing descriptions. Details are not described herein again.

In some feasible examples, the path may include at least one of the following: an RLC entity or a MAC entity.

Optionally, the first information is MAC CE signaling. For the MAC CE signaling, refer to the descriptions in FIG. 5. Details are not described herein again. In this way, a DRB with the PSI-based discard being activated and/or a DRB with the PSI-based discard not being activated may be determined through the first information.

In this embodiment of this application, the DRB with the PSI-based discard not being activated may be a DRB with the PSI-based discard being deactivated, or may be described as a DRB without the PSI-based activation. These DRBs may be referred to as first DRBs. The DRB with the PSI-based discard being activated may be a DRB with the PSI-based discard not being deactivated, or may be described as a DRB with the PSI-based discard being activated. These DRBs may be referred to as second DRBs. A transmission path of a data packet carried on the first DRB may be referred to as a first path, and a transmission path of a data packet carried on the second DRB may be referred to as a second path. In this way, the first path does not activate the PSI-based discard, or deactivates the PSI-based discard, or does not activate based on PSI discard. The second path activates the PSI-based discard, or does not deactivate the PSI-based discard, or activates based on PSI discard.

In some feasible examples, the method may further include: applying a first timer to a data packet of the first path, and applying a second timer to a data packet of the second path.

Duration of the first timer is less than duration of the second timer. The first timer and the second timer are used to discard a data packet, and importance of the data packet to which the first timer is applied is lower than importance of the data packet to which the second timer is applied. In other words, when the first timer is enabled for the data packet and the duration of the first timer is exceeded, the data packet is discarded if it has not been transmitted. When the second timer is enabled for the data packet and the duration of the second timer is exceeded, the data packet is discarded if it has not been transmitted.

Optionally, the first timer may be a discard timer for low importance, and the second timer may be a discard timer.

It may be understood that the first timer with short duration is applied to a low-importance data packet, and the second timer with long duration is applied to a high-importance data packet, so that the low-importance data packet is preferentially discarded, which may allow the high-importance data packet to be discarded at a later time, thereby improving effectiveness of data transmission.

S702: The PDCP entity transmits the data packet to the first path when the first path does not activate the PSI-based discard.

It may be understood that, in the method shown in FIG. 7, the PDCP entity is associated with at least one path. If the PDCP entity determines that the first path for data packet transmission does not activate the PSI-based discard, the PDCP entity may transmit the data packet to the first path. The data packet may include the delay-critical data volume. In other words, transmitting a data packet to a path that does not discard a data packet may improve effectiveness of data transmission.

For example, the first path is a first RLC entity and the second path is a second RLC entity. As shown in FIG. 3 or FIG. 4, when the first RLC entity does not activate the PSI-based discard, it indicates that the first RLC entity does not discard the data packet, and the PDCP entity may transmit the data packet to the first RLC entity. When the second RLC entity activates the PSI-based discard, it indicates that the second RLC entity discards the data packet, and the PDCP entity may not transmit the data packet to the second RLC entity.

For another example, the first path is a first MAC entity, and the second path is a second MAC entity. Refer to FIG. 4. When the first MAC entity does not activate the PSI-based discard, it indicates that the first MAC entity does not discard the data packet, and the PDCP entity may transmit the data packet to the first MAC entity. When the second RLC entity activates the PSI-based discard, it indicates that the second MAC entity discards the data packet, and the PDCP entity may not transmit the data packet to the second MAC entity.

Optionally, step S702 may include: The PDCP entity transmits the delay-critical data volume to the first path if the first path does not activate the PSI-based discard and meets a first condition.

When the first path is a MAC entity, reference may be made to the foregoing descriptions for the first condition. Details are not described herein again.

For example, the first path is the first MAC entity. Refer to FIG. 3. When the first MAC entity does not activate the PSI-based discard, it indicates that the first MAC entity does not discard the data packet. When the first MAC entity has configured the DSR and the first MAC entity has triggered the DSR, it indicates that the first MAC entity meets the first condition, and the PDCP entity may transmit the delay-critical data volume to the first MAC entity by using the first RLC entity and/or the second RLC entity associated with the first MAC entity. When the first RLC entity associated with the first MAC entity has configured the DSR and the first RLC entity has triggered the DSR, or when an LCG 1 or an LCH 1 corresponding to the first RLC entity associated with the first MAC entity has configured the DSR and the LCG 1 or the LCH 1 has triggered the DSR, it indicates that the first MAC entity meets the first condition, and the PDCP entity may transmit the delay-critical data volume to the first MAC entity by using the first RLC entity associated with the first MAC entity. When the first MAC entity has not configured the DSR, or the first MAC entity has configured the DSR and has not triggered the DSR, it indicates that the first MAC entity does not meet the first condition, and the PDCP entity may not transmit the delay-critical data volume to the first MAC entity. That is, the delay-critical data volume is not transmitted to the first MAC entity by using the first RLC entity, and the delay-critical data volume is not transmitted to the first MAC entity by using the second RLC entity. When the second RLC entity associated with the first MAC entity has configured the DSR and the second RLC entity has not triggered the DSR, or when an LCG 2 or an LCH 2 corresponding to the second RLC entity associated with the first MAC entity has configured the DSR and the LCG 2 or the LCH 2 has not triggered the DSR, it indicates that the first MAC entity does not meet the first condition, and the PDCP entity may not transmit the delay-critical data volume to the first MAC entity by using the second RLC entity.

For another example, the first path is the first MAC entity, and the second path is the second MAC entity. Refer to FIG. 4. When the first MAC entity does not activate the PSI-based discard, it indicates that the first MAC entity does not discard the data packet. When the first MAC entity has configured the DSR and the first MAC entity has triggered the DSR, or when the first RLC entity associated with the first MAC entity has configured the DSR and the first RLC entity has triggered the DSR, or when the LCG 1 or the LCH 1 corresponding to the first RLC entity associated with the first MAC entity has configured the DSR and the LCG 1 or the LCH 1 has triggered the DSR, it indicates that the first MAC entity meets the first condition, and the PDCP entity may send the delay-critical data volume to the first MAC entity associated with the first RLC entity by using the first RLC entity. When the second MAC entity activates the PSI-based discard, it indicates that the second MAC entity discards the data packet, and the PDCP entity may not transmit the data packet to the second MAC entity. Even when the second MAC entity has configured the DSR and has triggered the DSR, or when the second RLC entity associated with the second MAC entity has configured the DSR and the second RLC entity has triggered the DSR, or when the LCG 2 or the LCH 2 corresponding to the second RLC entity associated with the second RLC entity has configured the DSR and the LCG 2 or the LCH 2 has triggered the DSR, the PDCP entity may either not send the delay-critical data volume to the second MAC entity. That is, the time domain-critical data volume is not sent to the second MAC entity associated with the second RLC entity by using the second RLC entity.

In some feasible examples, when the first path is an RLC entity, whether the RLC entity meets the first condition may include at least one of the following: if a MAC entity associated with the RLC entity has configured and triggered the DSR, it is determined that the RLC entity meets the first condition; if the RLC entity has configured and triggered the DSR, it is determined that the RLC entity meets the first condition; if an LCH or an LCG corresponding to the RLC entity has configured and triggered the DSR, it is determined that the RLC entity meets the first condition; if the MAC entity associated with the RLC entity has not configured the DSR, it is determined that the RLC entity does not meet the first condition; if the MAC entity associated with the RLC entity has configured the DSR and has not triggered the DSR, it is determined that the RLC entity does not meet the first condition; if the RLC entity has not configured the DSR, it is determined that the RLC entity does not meet the first condition; if the RLC entity has configured the DSR and has not triggered the DSR, it is determined that the RLC entity does not meet the first condition; if the LCH or the LCG corresponding to the RLC entity has not configured the DSR, it is determined that the RLC entity does not meet the first condition; or if the LCH or the LCG corresponding to the RLC entity has configured the DSR and has not triggered the DSR, it is determined that the RLC entity does not meet the first condition.

In the following, the first path is the first RLC entity, and the second path is the second RLC entity.

For example, refer to FIG. 3. When the first RLC entity does not activate the PSI-based discard, it indicates that the first RLC entity does not discard the data packet, and may transmit the data packet to the first RLC entity. When the first RLC entity has configured the DSR and the first RLC entity has triggered the DSR, or when the first MAC entity associated with the first RLC entity has configured the DSR and the first MAC entity has triggered the DSR, or when the LCG 1 or the LCH 1 corresponding to the first RLC entity has configured the DSR and the LCG 1 or the LCH 1 has triggered the DSR, it indicates that the first RLC entity meets the first condition, and the PDCP entity may transmit the delay-critical data volume to the first RLC entity. When the second RLC entity activates the PSI-based discard, it indicates that the second RLC entity discards the data packet, and may not transmit the data packet to the second RLC entity. Even when the second RLC entity has configured and triggered the DSR, or when the first MAC entity associated with the second RLC entity has configured and triggered the DSR, or when the LCG 2 or the LCH 2 corresponding to the second RLC entity has configured and triggered the DSR, the PDCP entity may either not transmit the data packet to the second RLC entity.

For another example, refer to FIG. 4. When the first MAC entity does not activate the PSI-based discard, it indicates that the first RLC entity does not discard the data packet, and the PDCP entity may transmit the data packet to the first RLC entity. When the first RLC entity has configured the DSR and the first RLC entity has triggered the DSR, or when the first MAC entity associated with the first RLC entity has configured the DSR and the first MAC entity has triggered the DSR, or when the LCG 1 or the LCH 1 corresponding to the first RLC entity has configured the DSR and the LCG 1 or the LCH 1 has triggered the DSR, it indicates that the first RLC entity meets the first condition, and the PDCP entity may send the delay-critical data volume to the first RLC entity. When the second RLC entity activates the PSI-based discard, it indicates that the second RLC entity discards the data packet, and the PDCP entity may not transmit the data packet to the second RLC entity. Even when the second RLC entity has configured the DSR and triggered the DSR, or when the second MAC entity associated with the second RLC entity has configured the DSR and the second MAC entity has triggered the DSR, or when the LCG 2 or the LCH 2 corresponding to the second RLC entity has configured the DSR and the LCG 2 or the LCH 2 has triggered the DSR, the PDCP entity may either not send the delay-critical data volume to the second RLC entity.

It may be understood that when the PDCP entity is associated with at least two paths, if the PDCP entity determines that the first path for data packet transmission that does not activate the PSI-based discard meets the first condition, the delay-critical data volume may be transmitted through the first path. Otherwise, when the first path does not meet the first condition, the delay-critical data volume is not transmitted, thereby further improving effectiveness of data transmission.

In some feasible examples, before step S702, the following step may be further included: The PDCP entity determines that a total initial transmission data volume of the PDCP entity is greater than a first threshold.

For the total initial transmission data volume of the PDCP entity and the first threshold, refer to the foregoing descriptions. Details are not described herein again.

It may be understood that when the first path does not activate PSI-based discard and the total initial transmission data volume of the PDCP entity is greater than the first threshold, the PDCP entity may transmit the data packet through the first path. If the total initial transmission data volume of the PDCP entity is less than or equal to the first threshold, the data packet may not be transmitted through the first path.

It should be noted that, in the foregoing example, when the total initial transmission data volume of the PDCP entity is equal to the first threshold, the data packet is not transmitted through the first path. Actually, when the total initial transmission data volume of the PDCP entity is equal to the first threshold, the data packet may be transmitted through the first path. Alternatively, when the total initial transmission data volume of the PDCP entity is greater than or equal to the first threshold, the PDCP entity transmits the delay-critical data volume to the first path. Alternatively, when the total initial transmission data volume of the PDCP entity is greater than or equal to the first threshold and the first path meets the first condition, the PDCP entity transmits the delay-critical data volume to the first path.

The foregoing describes in detail the method in embodiments of this application. The following provides apparatuses in embodiments of this application.

FIG. 8 is a diagram of a structure of a communication apparatus according to an embodiment of this application. As shown in FIG. 8, the communication apparatus may include a transceiver unit 801 and a processing unit 802. The transceiver unit 801 may be an apparatus having input (receiving) or output (sending) of a signal, and is configured to perform signal transmission with another device or another component in the device.

The processing unit 802 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a donor node, a relay node, or a chip), execute a software program, and process data of the software program.

The communication apparatus may include a terminal device or a network device, or may be specifically a terminal device or a PDCP entity of the network device.

In a first aspect, when the communication apparatus is a PDCP entity of the terminal device, the processing unit 802 is configured to determine that a MAC entity meets a first condition.

The transceiver unit 801 is configured to transmit a delay-critical data volume to a first MAC entity when the first MAC entity meets the first condition.

That the MAC entity meets the first condition includes at least one of the following: the MAC entity has configured and triggered a DSR; an RLC entity associated with the MAC entity has configured and triggered the DSR; and an LCH or an LCG corresponding to the RLC entity associated with the MAC entity has configured and triggered the DSR.

In some feasible examples, the processing unit 802 is further configured to perform at least one of the following: if the MAC entity has not configured the DSR, determine that the MAC entity does not meet the first condition; if the MAC entity has configured and has not triggered the DSR, determine that the MAC entity does not meet the first condition; if the RLC entity associated with the MAC entity has not configured the DSR, determine that the MAC entity does not meet the first condition; if the RLC entity associated with the MAC entity has configured and has not triggered the DSR, determine that the MAC entity does not meet the first condition; if the LCH or the LCG corresponding to the RLC entity associated with the MAC entity has not configured the DSR, determine that the MAC entity does not meet the first condition; or if the LCH or the LCG corresponding to the RLC entity associated with the MAC entity has configured and has not triggered the DSR, determine that the MAC entity does not meet the first condition.

In some feasible examples, the delay-critical data volume includes a data volume of at least one of the following: delay-critical data for which no PDCP data PDU has been constructed; a PDCP data PDU containing delay-critical data that has not been submitted to a lower layer; a PDCP control PDU; a to-be-retransmitted PDCP service data unit SDU for an AM DRB; and a to-be-retransmitted PDCP data PDU for the AM DRB.

In some feasible examples, the RLC entity associated with the first MAC entity is a primary RLC entity or corresponds to a primary path, and the delay-critical data volume transmitted to the first MAC entity includes a data volume of the PDCP control PDU. Alternatively, the RLC entity associated with the first MAC entity is not a primary RLC entity or does not correspond to a primary path, and the delay-critical data volume transmitted to the first MAC entity does not include a data volume of the PDCP control PDU.

In some feasible examples, the PDCP entity is associated with two or more RLC entities, or the PDCP entity has configured PDCP duplication.

In some feasible examples, the transceiver unit 801 is further configured to: if a total initial transmission data volume of the PDCP entity is greater than a first threshold, transmit the delay-critical data volume to the first MAC entity that meets the first condition.

In some feasible examples, the first MAC entity that meets the first condition is associated with a primary RLC entity or is associated with a split secondary RLC entity, or a radio bearer associated with the PDCP entity is a split bearer.

In some feasible examples, when the radio bearer is a dual active protocol stack DAPS bearer, if the first MAC entity is associated with a source cell, the delay-critical data volume transmitted to the first MAC entity does not include a data volume of the PDCP control PDU. Alternatively, when the radio bearer is the DAPS bearer, if the first MAC entity is associated with a target cell, the delay-critical data volume transmitted to the first MAC entity includes the data volume of the PDCP control PDU.

In a second aspect, when the communication apparatus is a PDCP entity, the processing unit 802 is configured to determine whether a path for transmitting a data packet activates PSI-based discard.

The transceiver unit 801 is configured to transmit the data packet to a first path when the first path does not activate the PSI-based discard. The data packet includes a delay-critical data volume.

In some feasible examples, the processing unit 802 is further configured to determine that a total initial transmission data volume of the PDCP entity is greater than a first threshold.

In some feasible examples, the path includes at least one of the following: an RLC entity or a MAC entity.

In some feasible examples, the path includes a second path, and the second path activates the PSI-based discard.

In some feasible examples, the processing unit 802 is further configured to apply a first timer to a data packet of the first path. The processing unit 802 is further configured to apply a second timer to a data packet of the second path. Duration of the first timer is less than duration of the second timer, the first timer and the second timer are used to discard a data packet, and importance of the data packet to which the first timer is applied is lower than importance of the data packet to which the second timer is applied.

In a second aspect, when the communication apparatus is a network device, the transceiver unit is configured to send sending first information to a terminal device. The first information is used to determine whether a path for transmitting a data packet activates PSI-based discard, and the data packet includes a delay-critical data volume.

In some feasible examples, the path includes at least one of the following: an RLC entity or a MAC entity.

For implementations of the transceiver unit 801 and the processing unit 802, refer to related descriptions in the method embodiment shown in FIG. 6 or FIG. 7. Details are not described herein again.

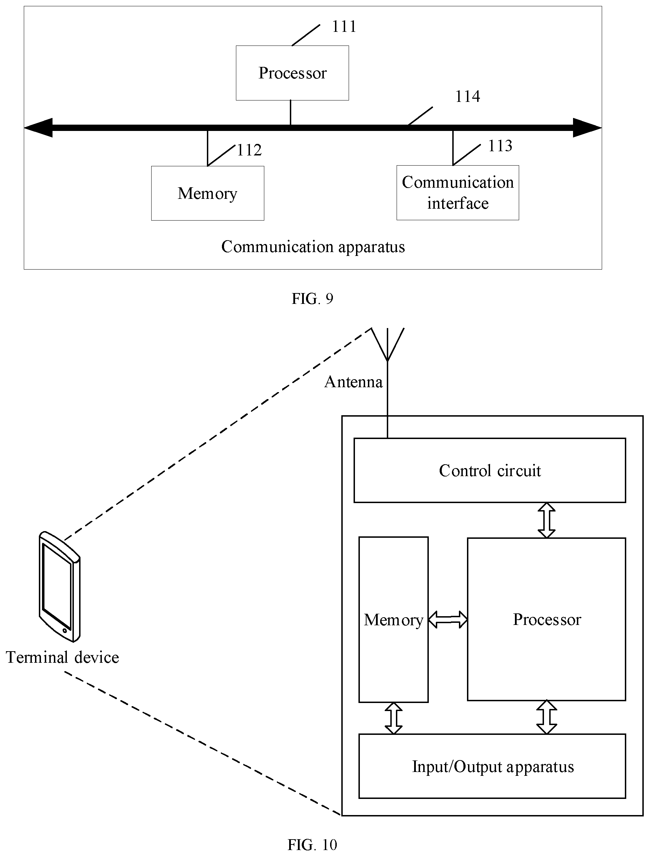

FIG. 9 is a diagram of a structure of another communication apparatus according to an embodiment of this application. As shown in FIG. 9, the communication apparatus may include a processor 111, a memory 112, and a communication interface 113. The processor 111, the memory 112, and the communication interface 113 are connected to each other through a bus 114.

The processor 111 may also be referred to as a processing unit, and may implement a specific control function. The processor 111 may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory 112 (a storage module) is integrated into the processor.

The memory 112 may be a volatile memory or a non-volatile memory, or may include both volatile and non-volatile memories. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that serves as an external cache. The memory 112 is any other medium that can be used to carry or store expected program code in a form of instructions or a data structure and can be accessed by a computer, which is not limited thereto. The memory 112 in embodiments of this application may alternatively be a circuit or any other apparatus that can implement a storage function, and is configured to store program instructions and/or data.

It should be noted that the memory described in this specification aims to include but is not limited to these memories and any memory of another proper type.

The communication interface 113 is configured to receive and send data and/or signaling.

Optionally, the communication apparatus may be configured to perform either method described in FIG. 6 or FIG. 7 in embodiments of this application.

The communication apparatus described in the foregoing embodiments may be a terminal device, a network device, a network element therein, or the like. However, a scope of the apparatus described in this application is not limited thereto, and a structure of the communication apparatus may not be limited by that in FIG. 8. The communication apparatus may be an independent device, for example, a module, a unit, an element, a circuit, a chip, or an interface, or may be a part of a larger device, configured to implement the methods described in the method embodiments.

FIG. 10 is a diagram of a structure of a terminal device according to an embodiment of this application. For ease of description, FIG. 10 only shows main components of the terminal device. As shown in FIG. 10, the terminal device includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to send and receive the radio frequency signal in an electromagnetic wave form. The input/output apparatus, for example, a touchscreen, a display, or a keyboard, is mainly configured to receive data entered by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 10 shows only one memory and one processor. In an actual terminal device, there may be a plurality of processors and memories. The memory may also be referred to as a storage medium, a storage device, or the like. This is not limited in embodiments of this application.

In an embodiment, the antenna is configured to perform operations performed by the transceiver unit 801 in the foregoing embodiments. The processor is configured to perform operations performed by the processing unit 802 in the foregoing embodiments. The terminal device may be further configured to perform the method performed by the terminal device in the method embodiment in FIG. 6 or FIG. 7. Details are not described herein again.

An embodiment of this application further provides a computer-readable storage medium, and the computer-readable storage medium stores a computer program. When the program is executed by the processor, a related procedure in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When component modules of the foregoing device are implemented in a form of a software functional unit and sold or used as an independent product, the component modules may be stored in a computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in either of the method embodiment in FIG. 6 or FIG. 7. The chip system may include a chip, or may include a chip and another discrete component.

An embodiment of this application further provides a communication system. The system includes a terminal device and a network device, or units therein, such as a PDCP entity. For specific descriptions, refer to either communication method shown in FIG. 6 or FIG. 7.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that serves as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory is any other medium that can be configured to carry or store expected program code in a form of instructions or a data structure and that can be accessed by a computer. This is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any other suitable types of memories.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the function is implemented in the form of a software functional unit and sold or used as an independent product, the integrated unit may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement. Steps in each embodiment may be partially performed (for example, the terminal device may not perform the steps performed by the terminal device in the foregoing embodiments). An execution sequence of different steps can be changed. Embodiments described in this specification may be combined with other embodiments, different embodiments may be combined with each other, and different steps of different embodiments in this specification may be combined.

The modules/units in the apparatuses in embodiments of this application may be combined, divided, and deleted based on an actual requirement.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment.

Terms "first", "second", "third", "fourth", and the like (if any) in embodiments of this application are intended to distinguish between similar objects, but do not necessarily indicate a specific order or sequence.

In embodiments of this application, "include" may be an inclusion relationship, or may be an equal relationship. For example, if A includes B, A may include other content in addition to B, or A and B are the same content.

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate three cases: Only A exists, both A and B exist, or only B exists, where A and B may be singular or plural. In addition, in the descriptions of this application, "a plurality of" means two or more than two unless otherwise specified. "At least one of the following" or a similar expression thereof indicates any combination of these items, including a single item or any combination of a plurality of items. For example, at least one of a, b, or c may represent a, b, c, a and b, a and c, b and c, or a, b, and c, where a, b, and c may be singular or plural.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions depart from the scope of the technical solutions of embodiments of this application.

## Claims

1. A communication method, applied to a packet data convergence protocol PDCP entity, wherein the method comprises:
determining that a medium access control MAC entity meets a first condition; and
transmitting a delay-critical data volume to a first MAC entity when the first MAC entity meets the first condition, wherein
that the MAC entity meets the first condition comprises at least one of the following:
the MAC entity has configured and triggered a delay status report DSR;
a radio link control RLC entity associated with the MAC entity has configured and triggered the DSR; and
a logic channel LCH or a logic channel group LCG corresponding to the RLC entity associated with the MAC entity has configured and triggered the DSR.

2. The method according to claim 1, further comprising at least one of the following:
if the MAC entity has not configured the DSR, determining that the MAC entity does not meet the first condition;
if the MAC entity has configured and has not triggered the DSR, determining that the MAC entity does not meet the first condition;
if the RLC entity associated with the MAC entity has not configured the DSR, determining that the MAC entity does not meet the first condition;
if the RLC entity associated with the MAC entity has configured and has not triggered the DSR, determining that the MAC entity does not meet the first condition;
if the LCH or the LCG corresponding to the RLC entity associated with the MAC entity has not configured the DSR, determining that the MAC entity does not meet the first condition; or
if the LCH or the LCG corresponding to the RLC entity associated with the MAC entity has configured and has not triggered the DSR, determining that the MAC entity does not meet the first condition.

3. The method according to claim 1 or 2, wherein the delay-critical data volume comprises a data volume of at least one of the following:
delay-critical data for which no PDCP data protocol data unit PDU has been constructed;
a PDCP data PDU containing delay-critical data that has not been submitted to a lower layer;
a PDCP control PDU;
a to-be-retransmitted PDCP service data unit SDU for an acknowledged mode data radio bearer AM DRB; and
a to-be-retransmitted PDCP data PDU for the AM DRB.

4. The method according to any one of claims 1 to 3, wherein the RLC entity associated with the first MAC entity is a primary RLC entity or corresponds to a primary path, and the delay-critical data volume transmitted to the first MAC entity comprises a data volume of the PDCP control PDU; or
the RLC entity associated with the first MAC entity is not a primary RLC entity or does not correspond to a primary path, and the delay-critical data volume transmitted to the first MAC entity does not comprise a data volume of the PDCP control PDU.

5. The method according to claim 4, wherein the PDCP entity is associated with two or more RLC entities, or the PDCP entity has configured PDCP duplication.

6. The method according to any one of claims 1 to 3, further comprising:
if a total initial transmission data volume of the PDCP entity is greater than a first threshold, transmitting the delay-critical data volume to the first MAC entity that meets the first condition.

7. The method according to claim 6, wherein the first MAC entity that meets the first condition is associated with a primary RLC entity or is associated with a split secondary RLC entity, or a radio bearer associated with the PDCP entity is a split bearer.

8. The method according to any one of claims 1 to 3, wherein when the radio bearer is a dual active protocol stack DAPS bearer, if the first MAC entity is associated with a source cell, the delay-critical data volume transmitted to the first MAC entity does not comprise a data volume of the PDCP control PDU; or
when the radio bearer is the DAPS bearer, if the first MAC entity is associated with a target cell, the delay-critical data volume transmitted to the first MAC entity comprises the data volume of the PDCP control PDU.

9. A communication method, applied to a packet data convergence protocol PDCP entity, wherein the method comprises:
determining whether a path for transmitting a data packet activates protocol data unit set importance PSI-based discard; and
transmitting the data packet to a first path when the first path does not activate the PSI-based discard, wherein the data packet comprises a delay-critical data volume.

10. The method according to claim 9, wherein before transmitting the data packet to the first path, the method further comprises:
determining that a total initial transmission data volume of the PDCP entity is greater than a first threshold.

11. The method according to claim 9 or 10, wherein the path comprises at least one of the following: an RLC entity or a MAC entity.

12. The method according to any one of claims 9 to 11, wherein the path comprises a second path, and the second path activates the PSI-based discard.

13. The method according to claim 12, further comprising:
applying a first timer to a data packet of the first path; and
applying a second timer to a data packet of the second path, wherein
duration of the first timer is less than duration of the second timer, the first timer and the second timer are used to discard a data packet, and importance of the data packet to which the first timer is applied is lower than importance of the data packet to which the second timer is applied.

14. A communication method, applied to a network device, wherein the method comprises:
sending first information to a terminal device, wherein the first information is used to determine whether a path for transmitting a data packet activates protocol data unit set importance PSI-based discard, and the data packet comprises a delay-critical data volume.

15. The method according to claim 14, wherein the path comprises at least one of the following: an RLC entity or a MAC entity.

16. A communication apparatus, comprising a processor, wherein the processor is configured to execute instructions stored in a memory, and when the instructions are executed, the communication method according to any one of claims 1 to 15 is implemented.

17. A computer-readable storage medium, wherein the computer-readable storage medium stores a computer program, and when the computer program is run on one or more processors, the method according to any one of claims 1 to 15 is implemented.
